# FASCICULE DE BREVET EUROPEEN

(11) **EP 2 686 387 B1**
(45) Date de publication et mention de la délivrance du brevet: **12.08.2015**
(21) Numéro de dépôt: 11813364.4
(22) Date de dépôt: 21.12.2011
(51) Int. Cl.: C09C 1/02, C01F 11/18, B01F 3/12, B02C 23/06

(54) **PROCÉDÉ DE BROYAGE DE CARBONATE DE CALCIUM DANS L'EAU EN PRÉSENCE D'UNE SOLUTION DE POLYMÈRE ACRYLIQUE ET D'UN SEL ALCALIN DE CARBONATE FABRIQUÉ IN SITU DANS LADITE SOLUTION**
VERFAHREN ZUM MAHLEN VON CALCIUMCARBONAT IN WASSER IN GEGENWART EINER ACRYLPOLYMERLÖSUNG UND IN SITU IN DIESER LÖSUNG HERGESTELLTES BASISCHES CARBONATSALZ
METHOD FOR GRINDING CALCIUM CARBONATE IN WATER IN THE PRESENCE OF AN ACRYLIC POLYMER SOLUTION AND A CARBONATE ALKALINE SALT MANUFACTURED IN SITU IN SAID SOLUTION

(30) Priorité: 18.03.2011 FR 1152228
(43) Date de publication de la demande: 22.01.2014
(73) Titulaire: Coatex S.A.S, 69730 Genay (FR)
(72) Inventeur: GUERRET, Olivier, F-46170 Pern (FR); JACQUEMET, Christian, F-69005 Lyon (FR)
(74) Mandataire: Fiorucci, Hélène
(86) Numéro de dépôt international: PCT/IB2011/003130
(87) Numéro de publication internationale: WO 2012/127276

(56) Documents cités:
- EP-A2- 0 129 329
- WO-A1-97/14651
- FR-A1- 2 895 686

## Description

La présente invention concerne un procédé de fabrication d'une suspension aqueuse de carbonate de calcium par broyage en milieu aqueux, en présence d'un agent d'aide au broyage acrylique et de sels alcalins de carbonate. Ces sels permettent de réduire la quantité d'agent d'aide au broyage mis en oeuvre, pour un niveau de performance équivalent en matière de rhéologie et de granulométrie des suspensions. En limitant la quantité de polymère acrylique, matière issue d'une énergie fossile non renouvelable, on préserve nos ressources naturelles.

Une des originalités de cette méthode repose sur une première étape de fabrication du sel alcalin de carbonate au sein-même de la solution aqueuse de polymère acrylique, par addition d'un excès d'hydroxyde alcalin et bullage de dioxyde de carbone. Ce faisant, plutôt que de mettre en oeuvre directement un sel alcalin de carbonate sous forme de poudre, avec les inconvénients liés à la manipulation d'un produit pulvérulent et irritant, on utilise un gaz (CO₂) et un liquide (hydroxyde alcalin). De plus, en consommant du dioxyde de carbone, on participe à la réduction du taux de CO₂ dans l'atmosphère, comme recommandée par le protocole de Kyoto.

L'industrie minéralière est une grande consommatrice de produits chimiques. Ceux-ci sont utilisés dans les différentes étapes de transformation/modification/traitement que subissent les matières minérales. Ainsi, dans le cas du carbonate de calcium d'origine naturelle ou synthétique, on réalise de nombreuses opérations dites de « broyage » (réduction de la taille granulométrique des particules) à sec ou en milieu aqueux, ou de « dispersion » (mise en suspension des particules dans un liquide).

Ces deux opérations sont rendues plus aisées par la mise en oeuvre respectivement d'agents d'aide au broyage, dont le rôle est de faciliter l'action mécanique d'attrition et de fragmentation des particules, et d'agents dispersants dont la fonction consiste à maintenir la viscosité de la suspension dans des plages acceptables au fur et à mesure qu'on y introduit les matières minérales. La présente invention est relative aux procédés de broyage qui mettent en oeuvre des agents d'aide au broyage.

L'art antérieur est particulièrement riche au sujet de tels additifs. Depuis de nombreuses années, on sait que les homopolymères hydrosolubles de l'acide acrylique constituent des agents efficaces pour aider à la dispersion ou au broyage en milieu aqueux du carbonate de calcium. En guise de référence, on pourra se reporter aux documents FR 2 539 137, FR 2 683 536, FR 2 683 537, FR 2 683 538, FR 2 683 539 et FR 2 802 830.

Pour le même type d'applications, il est également intéressant de copolymériser l'acide acrylique avec un autre monomère carboxylique, comme l'acide itaconique, l'acide méthacrylique, ou sulfonique tel que l'acide acrylamido-2-méthyl-2-propane sulfonique ou l'anhydride maléique, et / ou avec un autre monomère à insaturation éthylénique mais sans fonction carboxylique, comme un ester acrylique : ces variantes sont également décrites dans les documents précédents.

On sait aussi que réguler l'indice de polymolécularité des polymères précités permet d'optimiser certaines de leurs performances. Ceci est rapporté dans les documents « Synthesis and Characterization of Poly(acrylic acid) Produced by RAFT Polymerization. Application as a Very Efficient Dispersant of CaCO₃, Kaolin, and TiO2 » (Macromolecules, 36(9), 3066-3077, 2003) et «Dispersion of calcite by poly(sodium acrylate) prepared by Reversible Addition-Fragmentation chain Transfer (RAFT) polymerization » (Polymer (2005), 46(19), 8565-8572). Le contrôle de cet indice de polymolécularité est notamment obtenu à partir de techniques de polymérisation dites « vivantes », comme illustrées dans les documents WO 02 / 070571 et WO 2005/095466. Le brevet FR 2 514 746 décrit quant à lui une méthode dite de « fractionnement » permettant de réguler l'indice de polymolécularité en sélectionnant des chaînes polymériques ayant une longueur donnée.

On sait également que le choix du poids moléculaire de ces polymères peut, pour des méthodes particulières de fabrication de carbonate de calcium, améliorer le rendement dudit procédé : le brevet EP 1 248 821 met par exemple l'accent sur des polymères carboxyliques de poids moléculaire élevé, pour disperser dans l'eau une quantité importante d'un carbonate de calcium issu d'une étape de broyage à faible concentration en l'absence de polymère.

Indépendamment de ces différents axes d'amélioration des propriétés applicatives d'un agent dispersant ou de broyage à base d'un acide acrylique (choix d'un comonomère, d'une technique de polymérisation, régulation du poids moléculaire), on sait que le choix particulier de certains agents de neutralisation conduit à des propriétés applicatives sensiblement améliorées.

Ainsi, le document EP 0 100 948 démontre l'intérêt d'une neutralisation par les ions sodium et calcium. Une génération de brevets postérieurs (FR 2 683 538 et FR 2 683 539) met quant à elle l'accent sur le couple d'ions magnésium / sodium. Enfin, on connaît une dernière génération de brevets (EP 1 347 834 et EP 1 347 835) qui repose sur une neutralisation partielle (tous les sites carboxyliques ne sont pas neutralisés) à partir de l'action conjointe d'un agent monovalent (préférentiellement le sodium) et d'au moins un agent divalent (préférentiellement le calcium ou le magnésium).

Néanmoins, l'ensemble de ces solutions repose sur la mise en oeuvre d'homopolymères et de copolymères de l'acide acrylique, dont on sait qu'ils génèrent du dioxyde de carbone, et qu'ils sont issus d'une matière première qui est le propylène, elle-même originaire du pétrole c'est-à-dire d'une énergie fossile. Minimiser leur quantité dans les procédés industriels comme celui de broyage en milieu aqueux du carbonate de calcium est aujourd'hui un enjeu majeur pour l'industrie chimique. Cette démarche s'inscrit dans la réduction du taux de CO₂ telle que définie par le protocole de Kyoto, et dans la limitation de la dépendance de nos procédés aux énergies fossiles : de manière plus générale, elle s'inscrit dans les concepts de « chimie verte » et de « développement durable ».

La Demanderesse a déposé une première Demande de Brevet sous le numéro FR 10 60012, non encore publiée, et qui repose sur un procédé de fabrication d'une suspension aqueuse de carbonate de calcium par broyage dans l'eau en présence d'un polymère acrylique et d'un sel alcalin de carbonate. De manière tout à fait avantageuse, elle a démontré qu'on parvenait alors à réduire la quantité de polyacrylate mise en oeuvre, tout en conservant ou en améliorant un certain nombre de propriétés liées à la rhéologie et à la granulométrie de la suspension. Dans les exemples, le sel alcalin de carbonate était introduit sous forme de poudre, pendant l'opération de broyage et/ou dans la solution de polymère acrylique.

La présente invention consiste en une variante avantageuse de ce procédé. Celle-ci consiste à fabriquer au préalable le sel alcalin de carbonate, au sein de la solution aqueuse du polymère acrylique qui sera utilisé comme agent d'aide au broyage. Cette fabrication est réalisée de manière très simple, par addition dans ladite solution d'hydroxyde alcalin sous forme liquide et introduction de CO₂ gazeux. La réaction est poursuivie entre ces deux composés, avantageusement jusqu'à la consommation totale de l'hydroxyde alcalin.

Le premier avantage de cette méthode repose sur la mise en oeuvre d'un liquide (hydroxyde alcalin) et d'un gaz (CO₂), plutôt que d'une poudre (sel alcalin), produit toujours délicat à manipuler de part son caractère pulvérulent et irritant. Le second réside dans la consommation de dioxyde de carbone : on diminue ainsi « l'empreinte CO₂ » du procédé global en réduisant la quantité de ce produit dans notre atmosphère.

Quant aux performances obtenues avec les agents d'aide au broyage en présence des sels alcalins de carbonate selon la présente invention, la Demanderesse se réfère aux possibles mécanismes évoqués dans la Demande précitée. On sait qu'au cours de l'opération de broyage, la concentration en ions calcium augmente dans la phase aqueuse, de part la fragmentation des particules individuelles de carbonate de calcium. Or, il est bien connu que ces ions calcium constituent avec les polyacrylates des espèces complexes ions-polymères, plus ou moins insolubles en phase aqueuse.

Sans vouloir être liée à une quelconque théorie, la Demanderesse pense que l'ajout de sels alcalins de carbonate dans l'eau modifie à la fois la solubilité des polyacrylates en phase aqueuse mais aussi les propriétés de surface des particules de carbonate de calcium : ceci favorise l'adsorption des polymères acryliques à la surface des particules minérales. Les mécanismes de broyage étant favorisés par une bonne adsorption des polyacrylates à la surface des particules minérales, on améliore ainsi le rendement du procédé de broyage.

De plus, la Demanderesse entend souligner que les sels alcalins de carbonate mis en oeuvre selon l'invention n'ont aucune action directe sur le broyage du carbonate de calcium : ce ne sont pas des agents d'aide au broyage au sens de la définition donnée au début de cette Demande. De plus et dans l'état actuel des connaissances de la Demanderesse, ces sels ne modifient en rien les caractéristiques du carbonate obtenu après broyage par rapport à un carbonate broyé avec le même agent d'aide au broyage mais sans le sel (il faut toutefois augmenter la dose d'agent de broyage pour obtenir les mêmes caractéristiques granulométriques et rhéologiques pour la suspension finale). A travers ces caractéristiques, on entend essentiellement les propriétés optiques usuelles d'un carbonate de calcium, comme sa blancheur et son opacité.

Aussi, un premier objet de l'invention consiste en un procédé de fabrication d'une suspension aqueuse de carbonate de calcium par broyage dans l'eau avec au moins un polymère hydrosoluble de l'acide acrylique, avec introduction d'au moins un sel alcalin de carbonate dans ladite suspension, comprenant les étapes de :
a) introduire dans une solution aqueuse d'au moins un polymère hydrosoluble de l'acide acrylique, acide ou partiellement ou totalement neutralisé, un hydroxyde alcalin sous forme liquide, la quantité d'hydroxyde engagée étant supérieure à celle nécessaire à la neutralisation totale dudit polymère,
b) introduire dans ladite solution, avant et/ou pendant et/ou après, préférentiellement après l'étape a), du dioxyde de carbone gazeux,
c) introduire la solution obtenue après l'étape b) dans une suspension aqueuse contenant du carbonate de calcium
d) réaliser le broyage de ladite suspension.

Lorsqu'on indique que la quantité d'hydroxyde engagée est supérieure à celle nécessaire à la neutralisation totale du polymère acrylique, on signifie que cette quantité est en excès par rapport à la neutralisation du polymère. Par exemple, si le polymère est initialement totalement neutralisé, l'hydroxyde alcalin introduit servira exclusivement à produire le sel alcalin par réaction avec le dioxyde de carbone. Si le polymère est initialement partiellement neutralisé ou acide, l'hydroxyde alcalin sera introduit en une quantité supérieure à celle juste nécessaire pour la neutralisation dudit polymère.

Le broyage est réalisé selon les méthodes bien connues de l'homme du métier. L'homme du métier saura adapter le débit en dioxyde de carbone, prenant notamment en compte la taille et la géométrie du réacteur.

Ce procédé est aussi caractérisé en ce que le dioxyde de carbone est introduit dans un mélange gazeux en combinaison avec un gaz ou un mélange de gaz, choisi préférentiellement parmi l'azote et l'air.

Ce procédé est aussi caractérisé en ce que la concentration volumique de dioxyde de carbone est comprise entre 10 % et 100 % du mélange gazeux.

Ce procédé est aussi caractérisé en ce que la température de la solution aqueuse, au cours des étapes a) et b), est comprise entre 10°C et 90°C, préférentiellement entre 15°C et 50°C.

Ce procédé est aussi caractérisé en ce que les étapes a) et b) sont réalisées sous agitation mécanique de ladite solution aqueuse.

De manière générale, ce procédé est aussi caractérisé en ce que l'hydroxyde alcalin est choisi parmi les hydroxydes de sodium, potassium, lithium et leurs mélanges, préférentiellement parmi les hydroxydes de sodium, potassium et leurs mélanges, et est très préférentiellement l'hydroxyde de potassium.

Ce procédé est aussi caractérisé en ce que le polymère hydrosoluble de l'acide acrylique présente un poids moléculaire compris entre 3 000 g/mol et 15 000 g/mol, préférentiellement entre 4 000 g/mol et 10 000 g/mol. Ce poids moléculaire est déterminé, dans toute la présente Demande, par la méthode décrite dans la partie réservée aux exemples.

Ce procédé est aussi caractérisé en ce que le polymère hydrosoluble de l'acide acrylique, lorsqu'il est présent dans la solution aqueuse avant introduction de l'hydroxyde alcalin, et lorsqu'il est totalement ou partiellement neutralisé, l'est par un agent de neutralisation choisi parmi les hydroxydes de sodium, de potassium, de lithium, préférentiellement parmi les hydroxydes de sodium et de potassium.

Ce procédé est aussi caractérisé en ce que le polymère hydrosoluble de l'acide acrylique, lorsqu'il s'agit d'un copolymère, est un copolymère de l'acide acrylique avec un autre monomère choisi parmi les acides méthacrylique, crotonique, isocrotonique, cinnamique, maléique, itaconique, acrylamido-2-méthyl-2-propane sulfonique et leurs mélanges.

Ce procédé est aussi caractérisé en ce que le polymère hydrosoluble de l'acide acrylique est obtenu par des procédés de polymérisation radicalaire en solution, en émulsion directe ou inverse, en suspension ou précipitation dans des solvants appropriés, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, la polymérisation par transfert d'atome radicalaire (ATRP), la polymérisation radicalaire contrôlée par des dérivés soufrés, choisis parmi des carbamates, des dithioesters ou des trithiocarbonates (RAFT) ou des xanthates.

Ce procédé est aussi caractérisé en ce que le polymère hydrosoluble de l'acide acrylique est, avant ou après leur neutralisation, traité et séparé en plusieurs phases, selon des procédés statiques ou dynamiques, par un ou plusieurs solvants polaires appartenant préférentiellement au groupe constitué par le méthanol, l'éthanol, le propanol, l'isopropanol, les butanols, l'acétone, le tétrahydrofurane ou leurs mélanges.

Les exemples qui suivent permettront de mieux appréhender l'invention, sans toutefois en limiter la portée.

### EXEMPLES

Dans l'ensemble de la présente Demande, les caractéristiques granulométriques relatives au carbonate de calcium sont déterminées à partir d'un appareil Sedigraph™ 5100, commercialisé par la société MICROMERITICS™.

Les poids moléculaires sont déterminés par Chromatographie d'Exclusion Stérique, selon la méthode suivante.

Une prise d'essai de la solution de polymère correspondant à 90 mg de matière sèche est introduite dans un flacon de 10 mL. Il est ajouté de la phase mobile, additionnée de 0,04 % de DMF, jusqu'à une masse totale de 10 g. La composition de cette phase mobile est la suivante : NaHCO₃ : 0,05 mol/L, NaNO₃ : 0,1 mol/L, triéthanolamine : 0,02 mol/L, NaN₃ 0,03 % massique.

La chaîne de CES est composée d'une pompe isocratique de type Waters™ 510, dont le débit est réglé à 0,8 mL/min, d'un passeur d'échantillons Waters 717+, d'un four contenant une précolonne de type « Guard Column Ultrahydrogel Waters™ », suivie d'une colonne linéaire de type « Ultrahydrogel Waters™ » de 30 cm de long et 7,8 mm de diamètre intérieur.

La détection est assurée par un réfractomètre différentiel de type Waters™ 410. Le four est porté à la température de 60°C, et le réfractomètre est porté à la température de 45°C.

La CES est étalonnée avec une série d'étalons polyacrylate de sodium fournis par Polymer Standard Service de poids moléculaire au sommet de pic compris entre 2 000 et 1.10⁶ g/mol et d'indice de polymolécularité compris entre 1,4 et 1,7, ainsi qu'avec un polyacrylate de sodium de poids moléculaire égal à 5 600 g/mole et d'indice de polymolécularité égal à 2,4.

La courbe d'étalonnage est de type linéaire et prend en compte la correction obtenue grâce au marqueur de débit (DMF).

L'acquisition et le traitement du chromatogramme sont effectués par l'utilisation du logiciel PSS WinGPC Scientific v 4.02. Le chromatogramme obtenu est intégré dans la zone correspondant à des poids moléculaires supérieurs à 65 g/mol.

### Exemple 1

Dans un réacteur de 10 litres muni d'une agitation et d'une régulation en température, ainsi que d'un dispositif de suivi de la conductivité et du pH, on commence par introduire 5 464 grammes d'une solution aqueuse, contenant 41 % en poids sec d'un homopolymère hydrosoluble de l'acide acrylique totalement neutralisé par l'hydroxyde de sodium et de poids moléculaire égal à 5 500 g/mol.

On introduit ensuite 910 grammes d'hydroxyde de potassium et 144 grammes d'eau.

Ces quantités sont régulées de manière à obtenir, au final une solution aqueuse contenant 2 000 ppm en poids sec de polymère acrylique et 500 ppm en poids sec de carbonate de potassium.

L'agitation est réglée à 750 tours par minute et la température à 70°C.

Une fois la solution mise en température, on introduit un mélange équivolumique de dioxyde de carbone et d'air, à un débit de 10 litres par minute, par le fond du réacteur.

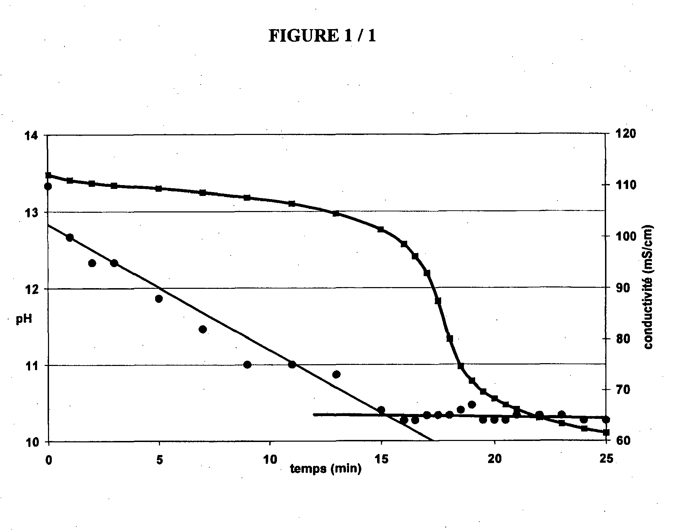

On suit alors l'évolution du pH et de la conductivité au cours du temps (figure 1 /1, où les ronds représentent la conductivité et les carrés le pH).

On stoppe l'arrivée de gaz lorsque la conductivité se stabilise, et bien après le point d'inflexion observé pour le pH : c'est-à-dire bien après la neutralisation totale du polymère et après consommation totale de l'hydroxyde de potassium.

On obtient alors une solution aqueuse dont le pH est environ égal à 10,1.

### Exemple 2

Cet exemple illustre l'utilisation de la solution aqueuse fabriquée précédemment, dans un procédé de broyage en milieu aqueux de carbonate de calcium.

En pratique, l'opération de broyage de la substance minérale à affiner consiste à broyer la substance minérale avec un corps broyant en particules très fines dans un milieu aqueux contenant l'agent d'aide au broyage.

L'opération de broyage proprement dite est réalisée à l'aide d'un équipement DYNO®-MILL type KDL - Pilot A contenant le corps broyant de granulométrie avantageusement comprise entre 0,20 et 4 millimètres. Le corps broyant se présente en général sous la forme de particules de matériaux aussi divers que l'oxyde de silicium, l'oxyde 25 d'aluminium, l'oxyde de zirconium ou de leurs mélanges, ainsi que les résines synthétiques de haute dureté, les aciers, ou autres. Un exemple de composition de tels corps broyants est donné par le brevet FR 2 303 681 qui décrit des éléments broyants formés de 30 % à 70 % en poids d'oxyde de zirconium, 0,1 % à 5 % d'oxyde d'aluminium et de 5 à 20 % d'oxyde de silicium.

Le corps broyant est de préférence utilisé en une quantité telle que le rapport en poids entre ce matériau de broyage et la substance minérale à broyer soit d'au moins 2/1, ce rapport étant de préférence compris entre les limites 3/1 et 5/1.

On commence par préparer une suspension aqueuse de carbonate de calcium à broyer en introduisant sous agitation de l'eau, le mélange contenant le dispersant et un additif, puis le carbonate de calcium. Après 20 minutes d'agitation, cette suspension est introduite dans la chambre de broyage contenant le corps broyant. Celui-ci est mis en mouvement au moyen de pales rotatives. Par passages successifs la suspension minérale est alors soumise à l'action mécanique de concassage et d'attrition.

La chambre de broyage est équipée d'une double enveloppe de refroidissement afin de maintenir la température de broyage dans un intervalle de température compris entre 60 et 80°C ainsi que d'un indicateur de pression.

L'opération de broyage en continu est maintenue jusqu'à l'observation d'une montée de la pression dans le broyeur de 0,5 bar. La suspension broyée est ensuite prélevée et caractérisée.

Pour chacun des essais réalisés, on détermine la viscosité Brookfield™, à 100 tours par minute et à 25°C, en sortie du broyeur (µ100 en mPa.s) : cette donnée permet de quantifier la fluidité de la suspension obtenue.

On détermine également avec un Sedigraph™ 5100 de la société Micromeritics™, la proportion en poids de particules dont le diamètre est inférieur à 2 µm (%<2 en %) : on évalue ainsi la finesse des grains de carbonate obtenus après broyage.

Les résultats correspondant apparaissent dans le tableau 1.

Dans tous les essais, les ppm désignent des mg d'additif sec par rapport au poids sec de carbonate de calcium exprimé en kg.

### Essai n° 1

Cet essai illustre l'art antérieur et met en oeuvre 2250 ppm d'un homopolymère hydrosoluble de l'acide acrylique totalement neutralisé par l'hydroxyde de sodium et de poids moléculaire égal à 5 500 g/mol.

### Essai n° 2

Cet essai illustre l'invention et met en oeuvre 2 500 ppm du mélange fabriqué selon l'essai de l'exemple 1. On met donc ici en oeuvre 2 000 ppm d'un homopolymère hydrosoluble de l'acide acrylique totalement neutralisé par l'hydroxyde de sodium et de poids moléculaire égal à 5 500 g/mol, et 500 ppm de carbonate de potassium.

**Tableau 1**

| Essai n° | 1 | 2 |
|---|---|---|
| AA/IN/HI | AA | IN |
| ABr (ppm) | 2000 | 2250 |
| Add (ppm) | 500 | 0 |
| µ100 (mPa.s) | 165 | 160 |
| %<2(%) | 52 | 55 |

| | | |
|---|---|---|
| AA/IN: art antérieur / invention ABr (ppm) : agent d'aide au broyage acrylique (quantité en ppm) Add (ppm) : sel alcalin de carbonate éventuellement utilisé avec l'agent d'aide au broyage (quantité en ppm) | | |

En comparant l'essai n° 1 selon l'art antérieur à l'essai n° 2 selon l'invention, on constate qu'on arrive à des caractéristiques quasi-identiques en terme de rhéologie et de granulométrie. En revanche, la mise en oeuvre de la solution aqueuse selon l'essai n° 2 permet de diminuer avantageusement l'empreinte CO₂ du procédé global, notamment par consommation de celui-ci au cours de l'étape de fabrication de ladite solution aqueuse. De plus, la quantité de polymère engagée étant moins importante selon l'essai n° 2, on contribue à préserver les énergies fossiles dont est issu l'acide acrylique qui constitue la matière première de ce polymère.

### Exemple 3

Cet exemple illustre l'utilisation des suspensions obtenues précédemment, en vue d'obtenir un carbonate de calcium à finesse accrue par une étape ultérieure de broyage.

Dans cet exemple, on part des suspensions aqueuses obtenues au cours de l'exemple 2 dont on cherche à améliorer la finesse en poursuivant le broyage en présence d'un homopolymère de l'acide acrylique, dont la moitié des sites carboxyliques est neutralisé par l'hydroxyde de sodium et l'autre moitié par l'hydroxyde de magnésium, et de poids moléculaire égal à 5 500 g/mol. Les essais correspondants sont notés 1 bis et 2 bis.

Le broyage est poursuivi jusqu'à obtenir une suspension de carbonate de calcium dont 80 % en poids des particules présentent un diamètre inférieur à 1 µm.

On mesure alors la viscosité Brookfield™, à 100 tours par minute et à 25°C, en sortie du broyeur (µ100 en mPa.s), ainsi que la demande en agent d'aide au broyage acrylique mis en oeuvre au cours de cette deuxième étape de broyage (ABr en ppm).

Les résultats correspondants apparaissent dans le tableau 2.

**Tableau 2**

| Essai n° | 1 bis | 2 bis |
|---|---|---|
| AA/IN | AA | IN |
| ABr (ppm) | 8500 | 8500 |
| µ100 (mPa.s) | 280 | 285 |

On constate qu'on parvient à fabriquer selon l'invention un carbonate de calcium ayant les mêmes caractéristiques granulométriques que celles obtenues selon l'art antérieur.

Le procédé selon l'invention permet donc d'obtenir également des carbonates de calcium ayant une finesse élevée mais ce, en ayant réduit l'empreinte CO₂ du procédé global et en consommant moins (globalement) de polymère acrylique que selon l'art antérieur.

## Revendications

1. Procédé de fabrication d'une suspension aqueuse de carbonate de calcium par broyage dans l'eau avec au moins un polymère hydrosoluble de l'acide acrylique, avec introduction d'au moins un sel alcalin de carbonate dans ladite suspension, comprenant les étapes de :
a) introduire dans une solution aqueuse d'au moins un polymère hydrosoluble de l'acide acrylique, acide ou partiellement ou totalement neutralisé, un hydroxyde alcalin sous forme liquide, la quantité d'hydroxyde engagée étant supérieure à celle nécessaire à la neutralisation totale dudit polymère,
b) introduire dans ladite solution, avant et/ou pendant et/ou après, préférentiellement après l'étape a), du dioxyde de carbone gazeux,
c) introduire la solution obtenue après l'étape b) dans une suspension aqueuse contenant du carbonate de calcium
d) réaliser le broyage de ladite suspension.

2. Procédé selon la revendication 1, **caractérisé en ce que** le dioxyde de carbone est introduit dans un mélange gazeux en combinaison avec un gaz ou un mélange de gaz, choisi préférentiellement parmi l'azote et l'air.

3. Procédé selon une des revendications 1 ou 2, **caractérisé en ce que** la concentration volumique de dioxyde de carbone est comprise entre 10 % et 100 % du mélange gazeux.

4. Procédé selon une des revendications 1 à 3, **caractérisé en ce que** la température de la solution aqueuse, au cours des étapes a) et b), est comprise entre 10°C et 90°C, préférentiellement entre 15°C et 50°C.

5. Procédé selon une des revendications 1 à 4, **caractérisé en ce que** les étapes a) et b) sont réalisées sous agitation mécanique de ladite solution aqueuse.

6. Procédé selon une des revendications 1 à 5, **caractérisé en ce que** l'hydroxyde alcalin est choisi parmi les hydroxydes de sodium, potassium, lithium et leurs mélanges, préférentiellement parmi les hydroxydes de sodium, potassium et leurs mélanges, et est très préférentiellement l'hydroxyde de potassium.

7. Procédé selon une des revendications 1 à 6, **caractérisé en ce que** le polymère hydrosoluble de l'acide acrylique présente un poids moléculaire compris entre 3 000 g/mol et 15 000 g/mol, préférentiellement entre 4 000 g/mol et 10 000 g/mol.

8. Procédé selon une des revendications 1 à 7, **caractérisé en ce que** le polymère hydrosoluble de l'acide acrylique, lorsqu'il est présent dans la solution aqueuse avant introduction de l'hydroxyde alcalin, et lorsqu'il est totalement ou partiellement neutralisé, l'est par un agent de neutralisation choisi parmi les hydroxydes de sodium, de potassium, de lithium, préférentiellement parmi les hydroxydes de sodium et de potassium.

9. Procédé selon une des revendications 1 à 8, **caractérisé en ce que** le polymère hydrosoluble de l'acide acrylique, lorsqu'il s'agit d'un copolymère, est un copolymère de l'acide acrylique avec un autre monomère choisi parmi les acides méthacrylique, crotonique, isocrotonique, cinnamique, maléique, itaconique, acrylamido-2-méthyl-2-propane sulfonique et leurs mélanges.

10. Procédé selon une des revendications 1 à 9, **caractérisé en ce que** le polymère hydrosoluble de l'acide acrylique est obtenu par des procédés de polymérisation radicalaire en solution, en émulsion directe ou inverse, en suspension ou précipitation dans des solvants appropriés, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, la polymérisation par transfert d'atome radicalaire (ATRP), la polymérisation radicalaire contrôlée par des dérivés soufrés, choisis parmi des carbamates, des dithioesters ou des trithiocarbonates (RAFT) ou des xanthates.

11. Procédé selon une des revendications 1 à 10, **caractérisé en ce que** le polymère hydrosoluble de l'acide acrylique est, avant ou après leur neutralisation, traité et séparé en plusieurs phases, selon des procédés statiques ou dynamiques, par un ou plusieurs solvants polaires appartenant préférentiellement au groupe constitué par le méthanol, l'éthanol, le propanol, l'isopropanol, les butanols, l'acétone, le tétrahydrofurane ou leurs mélanges.

## Patentansprüche

1. Verfahren zur Herstellung einer wässrigen Suspension von Calciumcarbonat durch Mahlen in Wasser mit mindestens einem wasserlöslichen Acrylsäurepolymer unter Eintragen mindestens eines Alkalicarbonatsalzes in die Suspension, bei dem man:
a) in eine wässrige Lösung mindestens ein wasserlösliches Acrylsäurepolymer, das sauer oder teilweise oder vollständig neutralisiert ist, und ein Alkalihydroxid in flüssiger Form einträgt, wobei die verwendete Hydroxidmenge größer ist als die zur vollständigen Neutralisation des Polymers notwendige Menge,
b) in die Lösung vor und/oder während und/oder nach Schritt a), vorzugsweise nach Schritt a), gasförmiges Kohlendioxid einträgt,
c) die nach Schritt b) erhaltene Lösung in eine Calciumcarbonat enthaltende wässrige Suspension einträgt,
d) die Suspension mahlt.

2. Verfahren nach Anspruch 1, **dadurch gekennzeichnet, dass** das Kohlendioxid in einem Gasgemisch in Kombination mit einem Gas oder einem Gasgemisch, das vorzugsweise aus Stickstoff und Luft ausgewählt wird, eingetragen wird.

3. Verfahren nach einem der Ansprüche 1 oder 2, **dadurch gekennzeichnet, dass** die Volumenkonzentration von Kohlendioxid zwischen 10% und 100% des Gasgemischs beträgt.

4. Verfahren nach einem der Ansprüche 1 bis 3, **dadurch gekennzeichnet, dass** die Temperatur der wässrigen Lösung im Lauf der Schritte a) und b) zwischen 10°C und 90°C und vorzugsweise zwischen 15°C und 50°C liegt.

5. Verfahren nach einem der Ansprüche 1 bis 4, **dadurch gekennzeichnet, dass** die Schritte a) und b) unter mechanischem Rühren der wässrigen Lösung durchgeführt werden.

6. Verfahren nach einem der Ansprüche 1 bis 5, **dadurch gekennzeichnet, dass** das Alkalihydroxid aus Natrium-, Kalium- und Lithiumhydroxid und Gemischen davon, vorzugsweise aus Natrium- und Kaliumhydroxid und Gemischen davon, ausgewählt wird und besonders vorteilhaft Kaliumhydroxid ist.

7. Verfahren nach einem der Ansprüche 1 bis 6, **dadurch gekennzeichnet, dass** das wasserlösliche Acrylsäurepolymer ein Molekulargewicht zwischen 3 000 g/mol und 15 000 g/mol, vorzugsweise zwischen 4 000 g/mol und 10 000 g/mol aufweist.

8. Verfahren nach einem der Ansprüche 1 bis 7, **dadurch gekennzeichnet, dass** das wasserlösliche Acrylsäurepolymer dann, wenn es vor dem Eintragen des Alkalihydroxids in der wässrigen Lösung vorliegt und wenn es teilweise oder vollständig neutralisiert ist, durch ein Neutralisationsmittel, das aus Natrium-, Kalium- und Lithiumhydroxid und vorzugsweise Natrium- und Kaliumhydroxid ausgewählt ist, neutralisiert ist.

9. Verfahren nach einem der Ansprüche 1 bis 8, **dadurch gekennzeichnet, dass** das wasserlösliche Acrylsäurepolymer dann, wenn es sich um ein Copolymer handelt, ein Copolymer von Acrylsäure mit einem anderen Monomer, das aus Methacrylsäure, Crotonsäure, Isocrotonsäure, Zimtsäure, Maleinsäure, Itaconsäure, Acrylamido-2-methyl-2-propansulfonsäure und Gemischen davon ausgewählt ist, ist.

10. Verfahren nach einem der Ansprüche 1 bis 9, **dadurch gekennzeichnet, dass** das wasserlösliche Acrylsäurepolymer durch Verfahren zur radikalischen Polymerisation in Lösung, in direkter oder inverser Emulsion, in Suspension oder Ausfällung in geeigneten Lösungsmitteln in Gegenwart von Katalysatorsystemen und Übertragungsmitteln oder auch durch Verfahren zur kontrollierten radikalischen Polymerisation und vorzugsweise durch Nitroxid-kontrollierte Polymerisation (NMP) oder durch Cobaloxim-kontrollierte Polymerisation, radikalische Atomtransfer-polymerisation (ATRP) oder radikalische Polymerisation, kontrolliert durch Schwefelderivate ausgewählt aus Carbamaten, Dithioestern oder Trithiocarbonaten (RAFT) oder Xanthaten, erhalten wird.

11. Verfahren nach einem der Ansprüche 1 bis 10, **dadurch gekennzeichnet, dass** das wasserlösliche Acrylsäurepolymer vor oder nach seiner Neutralisation gemäß statischen oder dynamischen Verfahren mit einem oder mehreren polaren Lösungsmitteln, die vorzugsweise zu der aus Methanol, Ethanol, Propanol, Isopropanol, den Butanolen, Aceton, Tetrahydrofuran und Gemischen davon bestehenden Gruppe gehören, behandelt und in mehrere Phasen getrennt wird.

## Claims

1. Method to manufacture an aqueous suspension of calcium carbonate by grinding in water with at least a water-soluble polymer of acrylic acid, with the introduction of at least an alkaline carbonate salt into the said suspension, including the following steps:
a) introducing into an aqueous solution of at least a water-soluble polymer of acrylic acid, whether acidic or partially or totally neutralized, an alkaline hydroxide in liquid form, where the quantity of hydroxide used is greater than that required for total neutralization of the said polymer,
b) introducing into the said solution, before and/or during and/or after, and preferentially after step a), of the gaseous carbon dioxide,
c) introducing the solution obtained after step b) into an aqueous suspension containing calcium carbonate,
d) grinding the said suspension.

2. Method according to claim 1, **characterized in that** the carbon dioxide is introduced in a gaseous blend in combination with a gas or a blend of gases, preferentially chosen from among nitrogen and air.

3. Method according to one of the claims 1 or 2, **characterized in that** the volume concentration of carbon dioxide is between 10% and 100% of the gaseous blend.

4. Method according to one of the claims 1 to 3, **characterized in that** the temperature of the aqueous solution, during steps a) and b), is between 10°C and 90°C, and preferentially between 15°C and 50°C.

5. Method according to one of the claims 1 to 4, **characterized in that** steps a) and b) are performed with mechanical stirring of the said aqueous solution.

6. Method according to one of the claims 1 to 5, **characterized in that** the alkaline hydroxide is chosen from among the hydroxides of sodium, potassium, lithium and their blends, preferentially from among the hydroxides of sodium, potassium and their blends, and is very preferentially potassium hydroxide.

7. Method according to one of the claims 1 to 6, **characterized in that** the water-soluble polymer of acrylic acid has a molecular weight between 3,000 g/mol and 15,000 g/mol, preferentially between 4,000 g/mol and 10,000 g/mol.

8. Method according to one of the claims 1 to 7, **characterized in that** the water-soluble polymer of acrylic acid, when it is present in the aqueous solution before the alkaline hydroxide is introduced, and when it is totally or partially neutralized, is neutralized by a neutralization agent chosen from among the hydroxides of sodium, potassium, lithium, preferentially from among the hydroxides of sodium and potassium.

9. Method according to one of the claims 1 to 8, **characterized in that** the water-soluble polymer of acrylic acid, when it is a copolymer, is a copolymer of acrylic acid with another monomer chosen from among the methacrylic, crotonic, isocrotonic, cinnamic, maleic, itaconic, acrylamido-2-methyl-2-propane sulfonic acids and their blends.

10. Method according to one of the claims 1 to 9, **characterized in that** water-soluble polymer of acrylic acid is obtained by methods of radical polymerization in solution, in a direct or reverse emulsion, in suspension or precipitation in appropriate solvents, in the presence of catalytic systems and transfer agents, or again by methods of controlled radical polymerization, and preferentially by Nitroxide Mediated Polymerization (NMP) or by cobaloximes, Atom Transfer Radical Polymerization (ATRP) or controlled radical polymerization, controlled by sulphurated derivatives, chosen from among carbamates, dithioesters or trithiocarbonates (RAFT) or xanthates.

11. Method according to one of the claims 1 to 10, **characterized in that** the said water-soluble polymer of acrylic acid is, before or after being neutralized, treated and separated into several phases, using static or dynamic methods, by one or several polar solvents preferentially belonging to the group constituted by methanol, ethanol, propanol, isopropanol, butanols, acetone, tetrahydrofuran or their blends.
